# EUROPEAN PATENT APPLICATION

(11) **EP 1 160 699 A1**
(43) Date of publication of application: **05.12.2001**
(21) Application number: 00830386.9
(22) Date of filing: 29.05.2000
(51) Int. Cl.: G06F 17/60

(54) **A system and a method for promoting products and/or services**

(71) Applicant: Lorenzini, Michela, 38060 Volano (TN) (IT); Benedetti, Carlo, 38065 Mori (TN) (IT); Piazza, Mauro, 38065 Mori (TN) (IT)
(72) Inventor: Lorenzini, Michela, 38060 Volano (TN) (IT); Benedetti, Carlo, 38065 Mori (TN) (IT); Piazza, Mauro, 38065 Mori (TN) (IT)
(74) Representative: Monti, Umberto

(57) **Abstract**

A method for promoting the selling of products and/or services including the steps of:
- a) providing a primary or attracting site (SR) and a manager site (SG);
- b) displaying on said attracting site (SR) at least one link (LAS1, .., LASn) referring to said manager site (SG) at which one or more associated companies (AS1, .., Asn) offer articles and/or services at promotional conditions to users (U1, .. Up) who access to the manager site from said attracting site (la, 2);
- c) allocating through the manager a bonus in favour of said users (U1, .. Up) and/or said companies (AS1, .., Asn), after a commercial transaction has been concluded between one of said user (U1, .. Up) and one of said companies (AS1, .. Asn) and/or between two or more of said associated companies through the manager site;
- d) accumulating bonuses till reaching a predetermined amount or for a predetermined time, and transferring them according to predetermined percentages to said users (U1, .., Up) and said companies (AS1, .. Asn).

## Description

This invention generally relates to a method for co-ordinating a plurality of parties comprising a notorious party, one or more commercial operators and several (potential) purchasers to accomplish commercial transactions, preferably but not exclusively electronic transactions, using a communication network to this purpose.

More particularly, the present invention relates to a system and a method for promoting commercial and sponsoring processes between parties of economic/commercial nature and others having a high capability of pulling in a large audience.

In one particular embodiment, the invention relates to a method through which a well known "attracting" party promotes and develops business relationships among several associated parties such as "vendors" and potential associated "purchasers" who are attracted by the notoriety of the "attracting" party.

In an advantageous presently preferred embodiment, both the purchasers and the vendors are users of a telecommunication network such as the Internet, and the system employs at least one server or similar device. Advantageously, the disclosed method can be employed for sponsoring or providing financial support to sport clubs, associations and the like and will be disclosed hereinbelow with reference to this particular but not limiting application.

The invention aims to create a system and a method for trading and sponsoring purposes, wherein the partakers (such as the attracting party, the manager and the associates or partners) contribute with their own characteristic elements either as a result of their activity or of their function in the economic and social context while at the same time obtaining direct and/or indirect benefits.

The proposed method relates sport clubs looking for financial resources with already sponsoring companies and/or with companies having an interest in such an advertising form (both companies or subjects being hereinafter defined as associates or partners) by stimulating the company development through a network of contacts generated by their presence on Web sites on Web pages that are linked to those of sport clubs, or nevertheless extensively to attracting situations for the collectivity (attracting party).

The surplus value resulting from the method according to this invention comes from the overall management of the network of contacts, transactions and achievements substantially without any direct sponsoring costs for the participants.

Actually, the larger sources of incomes for sport clubs, in particular for football and soccer clubs, are of various type, such as television rights, direct sponsorships and/or by equipment supply, support from sport associations, advertising, sales of tickets and subscriptions, image exploitation of single sportsmen and merchandising.

The growing needs of funds drive the sport clubs to search and exploit for any possible additional form of income, in fields up to now neglected. The known sponsoring systems show nevertheless several drawbacks such as the need of a dedicated structure and the use of money resources (i.e. costs) related to the return amount.

It is an object of the present invention to overcome the above limitations and drawbacks of the prior art methods. The above objects are achieved through methods according to claims 1 and 6, and through a server system according to claim 7. Further advantageous characteristics are recited in the dependent claims.

According to this invention, a relationship is created between the sport clubs (also called attracting party) and the method operator (also called manager) linked on the Internet (World Wide Web) thanks to the exclusive appeal of the former at the site of the sport club. This way it is possible to enter a trading system (having also a commercial value) from which a number of benefits are obtained. Alternatively, the sport club itself can handle and operate the whole process without the intervention of any third party.

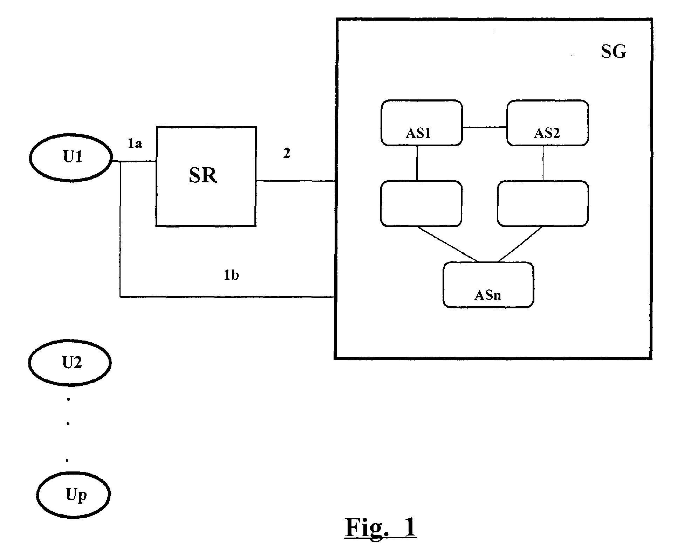

The present invention shall be better understood with reference to the attached Fig. 1 showing a block diagram illustrating an embodiment thereof.

With reference to the Figure 1, according to an embodiment of the invention for promoting products and/or services, at a Web site SR, also called primary or attracting site, there is provided at least one link LAS1, .., LASn referring to a site SG or manager site, where partner or associated companies AS1, .., Asn offer goods such as articles and/or services on sale at promotional conditions to users who accessed the manager site coming from the SR site either through the path 1b or through a direct connection to the SG manager site. The access to the attracting site or to the manager site can be protected at various degrees as chosen by the site holders. The system of commercial transactions within the manager site is nevertheless always protected.

Preferably, the sites are realised through appropriately programmed servers storing databases and programs for handling and controlling the connections and the necessary operations and transactions. Because of the fame of the sport club, the attracting site is in a position to draw a large number of fans who are potential purchasers.

When a commercial transaction has been completed either between a user U1, .., Up and an associated company or between two of the associated companies AS1, .., Asn, a percentage of the sales is retained by the manager site which shall allocate it in favour of the concerned vendor and purchaser in accordance with predetermined percentages. Upon reaching a given amount, these percentages are converted into a credit account at the manager site.

Such a credit or bonus will be converted - after a predetermined period of time - into one or more sponsorships, bound to the image of the attracting party, into supplies of goods or services relating to the activity of the associated companies, and (preferably) for the private parties, into a plurality of services or goods bound to the activity of the attracting party.

The manager takes care of all the aspects regarding the transactions, their accounting and their subsequent allocation, and of the bonus delivery to the entitled participants.

The (associated) companies adhering to the system can offer - through the manager site - their goods and/or services both to each other and to privates (in general called "users") on a market stimulated by the appeal offered by the sport club (first level benefit), and where each transaction is checked and produces also second level benefits through a form of bonus deriving from a percentage of the turnover which percentage - at predetermined times - is converted into sponsorships or services to be obtained without any additional cost.

The sponsorship effect is a direct consequence of the selling generated and stimulated by the method and the system of the invention. The associated companies in turn are committed to offer their products/services at favourable conditions, for example but not exclusively through a competitive price to the purchaser, e.g. at a higher discount percentage with respect to their conventional trade channels, and to invest a portion of their profit into the sponsorships system.

The sport club grants the use of its own image and appeal by ensuring an exclusive link towards the manager on its site or alternatively on its own page in a site of third parties, and in return obtains revenues in form of sponsorship.

In addition to the business data, the sport club shall deliver to the manager information about the complex of the affiliates, clubs and fans. Thus the manager will be able to associate them and to promote the contacts with the site in several ways thus increasing the method potentialities.

The associates can also be persons who are not affiliated to the sport clubs, as well as companies that are not yet sponsors but are interested in getting benefits from this mechanism. It is up to the manager to accept or refuse such requests.

To the private associates there can be offered different type of advantages: competitive prices, warrants that could not be obtained otherwise, dedicated promotional campaigns and a further return (the previously described bonus) related to a percentage of the purchases, to be distributed in form of gadgets and/or other forms to increase the relationship with the sport club (subscriptions, discounts, and so on) or by services rendered by the associated companies.

The access to the transactions at the manager site is protected and promoted by granting free cards to be used with a password, such cards further allowing to build up a database of the consumers' habits.

The manager has the role to generate, support and coordinate all the flows of goods, services, information and the financial resources and to make the system extremely fluid and remunerative for the adherents by exploiting all the means and instruments offered by the market and the technology. Moreover the manager can provide supplementary services in order to improve the behaviour of single participants also in environments that are not strictly bound to the above illustrated method.

From the technical point of view, the system is preferably based on the use of the Internet network. The manager shall have the main role to put into touch the purchasers and vendors and to supply a large amount of information about the services/products on sale. The information supply can be carried out automatically by the system or both the parties are directly involved.

The registered users - who carry out transactions through this system - shall exploit a protected access to a display of their situation up to that moment. The transactions carried out in such a system are protected by the use of cryptographic techniques in order to ensure the secrecy of data transmission and the authenticity of parties.

Although the invention has been illustrated with particular reference to a preferred embodiment thereof, it is not limited to this latter, but it extends to cover all the obvious alternatives and modifications that shall become evident to the skilled of the art.

## Claims

1. A method for promoting the selling of products and/or services including the steps of:
-a) providing a primary or attracting site (SR) and a manager site (SG);
-b) displaying on said attracting site (SR) at least one link (LAS1, .., LASn) referring to said manager site (SG) at which one or more associated companies (AS1, .., Asn) offer articles and/or services at promotional conditions to users (U1, .. Up) who access to the manager site from said attracting site (1a, 2) ;
-c) allocating through the manager a bonus in favour of said users (U1, .. Up) and/or said companies (AS1, .., Asn), after a commercial transaction has been concluded between one of said user (U1, .. Up) and one of said companies (AS1, .. Asn) and/or between two or more of said associated companies through the manager site;
-d) accumulating bonuses till reaching a predetermined amount or for a predetermined time, and transferring them according to predetermined percentages to said users (U1, .., Up) and said companies (AS1, .. Asn).

2. A method as claimed in claim 1, **characterised in that** an exclusive link (2) is provided between said attracting site (SR) and manager site (SG).

3. A method as claimed in claims 1 or 2, **characterised in that** said plurality of users (U1, .. Up) includes sport fans and said attracting party utilises the image of a sport club.

4. A method as claimed in claim 1, **characterised in that** said promotional conditions include at least one of the following:
- discount on list price;
- warrant conditions.
- indirect return in form of sponsorships.

5. A method as claimed in claim 3, **characterised in that** the exploitation of particular conditions applied to the transactions inside of the manager site (SG) requires a card provided with password and adapted to create a database of the consumers' habits.

6. A method for co-ordinating a plurality of parties including at least a commercial operator (AS1, .., Asn) and at least a purchaser (U1, .. An) to implement an electronic commercial transaction by using a communication network, including the steps of:
-a) connecting to a web site (SR) including at least one page, said site having an attracting function to draw a plurality of users (U1, .., Up);
-b) displaying on said site (SR) at least a link referring to at least one manager site (SG) where said commercial operators offer articles and/or services at promotional conditions to users who accessed the manager site from the attracting site;
-c) in response to a commercial transaction concluded between one of said purchasers (U1, .., Up) and one of said companies (AS1, .., Asn) operating at the manager site (SG), allocating through the site manager (SG) a bonus;
-d) accumulating said bonuses till reaching a predetermined portion or for a predetermined period of time and transferring them to said users (U1, .., Up) and/or companies (AS1, .. Asn).

7. A server system for implementing an electronic commerce distributed between a plurality of commercial operators (AS1, .., Asn) and a plurality of purchasers (U1, .., An) through a communication network, wherein said system includes a server bound to said communication network, to which said purchasers can have free access, **characterised in that** said server stores a program which implements a Web manager site (SG) connectable to a party attracting a plurality of users (U1, .., Up), wherein said site (SG) includes at least a space referring to one or more of said commercial operators (AS1, .. Asn) who offer articles and/or services at promotional conditions to purchasers who accessed the site through said attracting site; and by the fact that, in response to a commercial transaction concluded between one of said purchasers (U1, .., Up) and one of said operators (AS1, .., Asn) and/or through companies operating at the manager site, the manager allocates a bonus in favour of said users (U1, .. Up) and operators (AS1, .., Asn).
